# EUROPÄISCHE PATENTSCHRIFT

(11) **EP 3 851 724 B1**
(45) Veröffentlichungstag und Bekanntmachung des Hinweises auf die Patenterteilung: **10.08.2022**
(21) Anmeldenummer: 20305042.2
(22) Anmeldetag: 20.01.2020
(51) Int. Cl.: F16L 25/02, F16L 59/065, F16L 59/14, F16L 59/18

(54) **JOHNSTON-KUPPLUNG MIT GALVANISCHER TRENNUNG**
JOHNSTON COUPLING WITH GALVANIC SEPARATION
EMBRAYAGE JOHNSTON À SÉPARATION GALVANIQUE

(43) Veröffentlichungstag der Anmeldung: 21.07.2021
(73) Patentinhaber: Nexans, 92400 Courbevoie (FR)
(72) Erfinder: SCHULZ, Holger, 30179 Hannover (DE); WEBER, Patrick, 31008 Elze (DE)
(74) Vertreter: Ipsilon

(56) Entgegenhaltungen:
- EP-A1- 3 339 713
- CN-A- 103 307 380
- CN-A- 103 322 357
- US-A- 5 139 288

## Beschreibung

### Gebiet

Die Erfindung betrifft eine Steckkupplung für vakuumisolierte flexible Leitungen, die auch unter dem Begriff "Johnston-Kupplung" bekannt ist. Insbesondere betrifft die Erfindung eine Johnston-Kupplung mit galvanischer Trennung.

### Hintergrund

Tiefkalte Medien, die auch als kryogene Flüssigkeiten bezeichnet werden, werden häufig auf Schiffen, in Tankwaggons oder auf Tanklastwagen transportiert. Ein wichtiges Beispiel hierfür ist flüssiges Erdgas (LNG), das eine Verdampfungstemperatur von -162 °C (111 K) hat. Die Verladung wird typischerweise mit nicht-isolierten Leitungen und Kupplungen durchgeführt, die während der Verladung vereisen. Die fehlende Wärmeisolierung führt zur Verdampfung eines Teils des tiefkalten Mediums, was mit einem Energieverlust einhergeht, denn das verdampfte Medium muss an anderer Stelle mit hohem Energieaufwand wieder verflüssigt werden.

Bei der Verladung noch kälterer Medien, zum Beispiel flüssigem Wasserstoff (Verdampfungstemperatur -253 °C, 20 K) oder flüssigem Helium (Verdampfungstemperatur -269 °C, 4 K) würde an der Oberfläche von nicht-isolierten Leitungen und Kupplungen der Sauerstoff in der Umgebungsluft kondensieren, dessen Verdampfungstemperatur vergleichsweise höher ist (-183 °C; 90 K). Das ist höchst unerwünscht, weil durch flüssigen Sauerstoff eine potentielle Brandgefahr erheblich steigt.

Darüber hinaus sind für den Transport von solchen kryogenen Flüssigkeiten oder Medien auch vakuumisolierte Leitungen bekannt, die beispielsweise von der Firma Nexans hergestellt werden. Für Tank- und Verladezwecke sind die vakuumisolierten Leitungen flexibel ausgebildet und an einem Ende mit einer sogenannten Johnston-Kupplung ausgerüstet, mittels der zwei kryogene Leitungen verbindbar sind, ohne dass an der Verbindungsstelle die Wärmeisolierung verloren geht. Dadurch werden eine Vereisung der Kupplungsstelle und Verluste des kryogenen Mediums durch Verdampfung verringert.

Einfach ausgedrückt werden bei einer Johnston-Kupplung zwei doppelwandige vakuumisolierte Rohrleitungen ineinandergesteckt. Die Innendurchmesser solcher Rohrleitungen betragen typischerweise zwischen 20 mm und 150 mm. Grundsätzlich sind aber auch kleinere oder größere Innendurchmesser möglich. Das männliche Teil (innere doppelwandige Rohrleitung) wird in das weibliche Teil (äußere doppelwandige Rohrleitung) gesteckt. Man spricht auch von Kupplungsstecker und Kupplungsdose. Dadurch wird die äußere Oberfläche sehr gut zum inneren medienführenden Rohr wärmeisoliert. Hierfür müssen beide doppelwandigen Rohrleitungen über eine vorbestimmte Länge ineinandergesteckt werden. Je nach Medium und gewünschter Wärmeisolierung liegen typische Rohr-in-Rohr-Längen im Bereich von 200 mm bis 600 mm. Abweichungen zu kleineren oder größeren Längen sind bei einzelnen Anwendungsfällen möglich.

Die EP 3 339 713 A1 zeigt eine solche Steckkupplung für Kryoleitungen mit einer Kupplungsbuchse und einem Kupplungsstecker, bei welcher die Kupplungsbuchse und der Kupplungsstecker jeweils aus einem inneren Rohrstück und einem äußeren Rohrstück bestehen, wobei die Kupplungsbuchse und der Kupplungsstecker durch eine an ihrem" warmen" Ende befindliche Flanschverbindung lösbar miteinander verbunden sind und ein Ringspalt zwischen der Kupplungsbuchse und dem Kupplungsstecker am" kalten" Ende durch eine Ringdichtung und am" warmen" Ende durch eine im Bereich der Flanschverbindung befindliche Ringdichtung abgedichtet ist.

Rohrverbindungen, die zwei Objekte miteinander verbinden, die auf unterschiedlichem elektrischem Potenzial liegen, weisen eine galvanische Trennung auf, um die beiden Objekte elektrisch voneinander zu isolieren. Beispielsweise zwischen einem Schiff und einem Hafenkai, an dem das Schiff festgemacht ist, besteht immer eine Spannungsdifferenz. Dieser Spannungsunterschied wird beispielsweise durch ein kathodisches Schutzsystem eines Schiffes oder durch galvanisch erzeugte Spannungen erzeugt.

Der genannte Spannungsunterschied kann zum Entstehen von Zündquellen führen, die insbesondere beim Be- oder Entladen von brennbaren Produkten eine erhebliche Gefahrenquelle darstellen. Solche Zündquellen können zum Beispiel durch eine elektrische Verbindung zwischen dem Schiff und dem Hafenkai vermieden werden. In der Praxis hat es sich jedoch gezeigt, dass die in der elektrischen Verbindung fließenden Ströme zu einer unzulässigen Erwärmung der elektrischen Verbindung führen können.

Zur Vermeidung dieser Probleme wurden Vorschriften erlassen gemäß derer Schiff und eine Einrichtung an Land bzw. auf einem Hafenkai elektrisch getrennt bleiben sollen. Für Öltankschiffe und Terminals wird beispielsweise gefordert, dass Schiff und Uferstruktur elektrisch voneinander getrennt sind. Hierfür wird ein Isolierflansch in die Transportleitungen zwischen Schiff und Land eingesetzt. Ein solcher Isolierflansch ist beispielsweise aus der EP 0 113 948 A1 bekannt, die einen Kupplungskörper aus einem isolierenden Material vorschlägt, der beidseitig mit ringförmigen Flanschen an eine Rohrleitung verbunden ist, die auf der einen Seite zu dem Schiff und auf der anderen Seite zu einer landseitigen Einrichtung führt. Die Rohrleitung ist als nicht isolierte Rohrleitung ausgebildet.

Solche nicht isolierten Rohrleitungen funktionieren gut für den Transport von Flüssigkeiten, die bei Raumtemperatur flüssig sind, aber nicht für tiefkalte Medien bzw. kryogene Flüssigkeiten, die aus den eingangs genannten Gründen vakuumisolierte Leitungen und Kupplungen erforderlich machen.

Hiervon ausgehend hat die vorliegende Erfindung die Aufgabe, eine Steckkupplung für Kryoleitungen mit einer galvanischen Trennung zu schaffen, um eines oder mehrere der eingangs genannten Probleme zu überwinden oder zumindest zu verbessern.

### Zusammenfassung der Erfindung

Zur Lösung dieser Aufgabe schlägt die Erfindung nach einem ersten Aspekt eine Steckkupplung zum Verbinden einer ersten mit einer zweiten doppelwandigen vakuumisolierten Kryoleitung vor. Die Steckkupplung umfasst einen Kupplungsstecker und eine Kupplungsdose. Der Kupplungsstecker weist ein inneres und ein äußeres Rohrstück sowie einen ersten Anschlussflansch auf und ist mit der ersten Kryoleitung verbunden. Die Kupplungsdose weist ein inneres und ein äußeres Rohrstück sowie einen zweiten Anschlussflansch auf und ist mit der zweiten Kryoleitung verbunden. An einem distalen Ende des Kupplungssteckers ist eine kreisringförmige Dichtung angeordnet, so dass eine abgedichtete Verbindung zwischen der Kupplungsdose und dem Kupplungsstecker entsteht, wenn der Kupplungsstecker vollständig in die Kupplungsdose eingesteckt ist. Die erfindungsgemäße Steckkupplung zeichnet sich dadurch aus,
- dass die Dichtung an dem distalen Ende des Kupplungssteckers elektrisch isolierend ausgebildet ist,
- dass eine isolierende Hülse auf dem äußeren Rohrstück des Kupplungssteckers angeordnet ist und
- dass eine Isolierscheibe zwischen dem ersten und dem zweiten Anschlussflansch liegt, wenn der Kupplungsstecker in die Kupplungsdose gesteckt ist.

Die vorgeschlagene Steckkupplung bietet eine Lösung an, um einerseits tiefkalte Medien mittels einer vakuumisolierten Leitung zu transportieren, was im Hinblick auf Energieverluste durch Verdampfen des transportierten Mediums vorteilhaft ist. Gleichzeitig gestattet die vorgeschlagene Steckkupplung eine elektrische Trennung zwischen den Kupplungsteilen, die beispielsweise bei der Beladung von Schiffen wünschenswert bzw. zwingend vorgeschrieben ist.

Bei einer Weiterbildung der erfindungsgemäßen Steckkupplung sind in dem ersten und dem zweiten Anschlussflansch Durchgangslöcher für Schrauben zur Verbindung des ersten mit dem zweiten Anschlussflansch vorgesehen, in welche isolierende Buchsen eingesetzt sind, welche die Schrauben gegenüber dem ersten und/oder zweiten Anschlussflansch elektrisch isolieren.

Bei einer bevorzugten Ausführungsform der Steckkupplung ist der Außendurchmesser des ersten Anschlussflansches kleiner als der Außendurchmesser des zweiten Anschlussflansches. Auf dem ersten Anschlussflansch liegt ein drehbarer Drehflansch mit Durchgangslöchern für Schrauben auf, der in eine Drehstellung bringbar ist, in der die Durchgangslöcher des Drehflansches mit den Durchgangslöchern in dem zweiten Anschlussflansch fluchten.

Bei diesem Ausführungsbeispiel ist es nicht notwendig den Kupplungsstecker in der Kupplungsdose zu drehen, um zu erreichen, dass Durchgangslöcher für Befestigungsschrauben in dem Kupplungsstecker bzw. in der Kupplungsdose miteinander fluchten. Die Handhabung bei dem Schließen der Steckkupplung wird dadurch erheblich vereinfacht, weil die doppelwandige vakuumisolierten Kryoleitungen ein erhebliches Gewicht aufweisen können und nicht leicht zu bewegen sind.

Bei einer vorteilhaften Weiterbildung der Steckkupplung ist eine Dichtung zwischen der Isolierscheibe und dem zweiten Anschlussflansch und/oder zwischen der Isolierscheibe und dem ersten Anschlussflansch angeordnet. Diese zusätzliche(n) Dichtung(en) hat bzw. haben die Aufgabe, die Steckkupplung im warmen Bereich abzudichten für den Fall, dass die Dichtung an dem distalen Ende des Kupplungssteckers wegen der dort herrschenden niedrigen Temperaturen die Steckkupplung nicht einwandfrei abdichtet. Die zusätzlichen Dichtungen sorgen dafür, dass auch in dieser ungünstigen Situation kein verdampftes Medium austreten kann, das unter Umständen ein Explosionsrisiko darstellen kann.

Bei einer Abwandlung der Steckkupplung sind die Isolierscheibe und die isolierende Hülse als einstückiges Einzelteil ausgebildet. Bei dem Zusammenbau des Kupplungssteckers sind dadurch weniger Teile zu montieren.

Nach einem zweiten Aspekt der Erfindung wird eine Verladeeinrichtung für kryogene Fluide mit einer Steckkupplung gemäß dem ersten Aspekt der Erfindung vorgeschlagen.

Diese Verladeeinrichtung verwirklicht die im Zusammenhang mit der Steckkupplung bereits beschriebenen Vorteile bei der Verladung von tiefkalten Medien zwischen einem Schiff und einer an Land gelegenen Einrichtung.

### Kurze Beschreibung der Zeichnung

Nachfolgend wird die Erfindung anhand zweier Ausführungsbeispiele unter Bezugnahme auf die begleitenden Figuren exemplarisch näher erläutert. Alle Figuren sind rein schematisch und nicht maßstäblich. Es zeigen:
- Fig. 1: eine schematische Explosionsdarstellung einer Johnston-Kupplung mit galvanischer Trennung;
- Fig. 2: die Johnston-Kupplung aus Figur 1 nach dem Zusammenbau; und
- Fig. 3: ein weiteres Ausführungsbeispiel einer Johnston-Kupplung mit galvanischer Trennung im zusammengebauten Zustand.

Gleiche oder ähnliche Elemente sind in den Figuren mit gleichen oder ähnlichen Bezugszeichen versehen.

### Ausführungsbeispiel

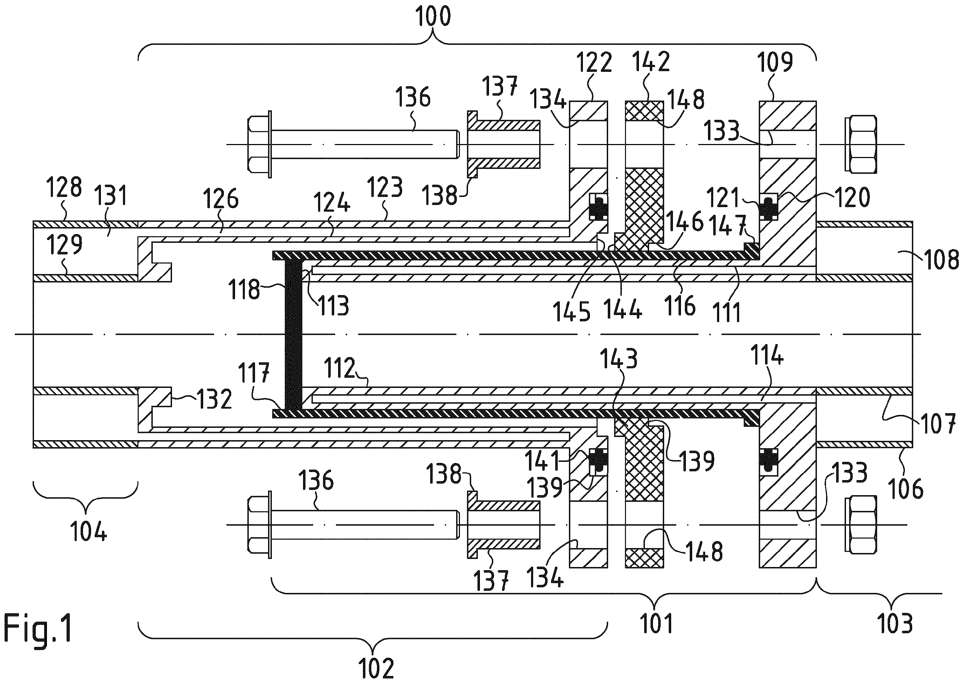

Figur 1 zeigt eine Steckkupplung, die als Ganzes mit dem Bezugszeichen 100 bezeichnet ist. Zu der Steckkupplung 100 gehören ein Kupplungsstecker 101 und eine Kupplungsdose 102, die in Figur 1 vor dem Zusammenbau und mit einem kleinen Abstand voneinander dargestellt sind.

Der Kupplungsstecker 101 ist mit einer ersten Kryoleitung 103 und die Kupplungsdose 102 mit einer zweiten Kryoleitung 104 verbunden. Die erste Kryoleitung 103 weist ein Außenrohr 106 sowie ein Innenrohr 107 auf, die durch einen Zwischenraum 108 voneinander getrennt und durch ein Isoliervakuum in dem Zwischenraum 108 thermisch voneinander isoliert sind. Die Kryoleitungen 103,104 sind doppelwandige vakuumisolierte Kryoleitungen.

Der Kupplungsstecker 101 umfasst einen ersten Anschlussflansch 109, ein äußeres Rohrstück 111 sowie ein inneres Rohrstück 112. Das Außenrohr 106 der ersten Kryoleitung 103 ist an eine erste Hauptfläche des ersten Anschlussflansches 109 angeschweißt. Auf der gegenüberliegenden Hauptfläche des Anschlussflansches 109 ist das äußere Rohrstück 111 an den ersten Anschlussflansch 109 angeschweißt. Ein von dem ersten Anschlussflansch entferntes distales Ende 113 des äußeren Rohrstückes 111 ist mit dem inneren Rohrstück 112 verbunden, das sich zu dem ersten Anschlussflansch hin erstreckt und mit dem Innenrohr 107 der ersten Kryoleitung 103 verbunden ist. Zwischen dem äußeren Rohrstück 111 und dem inneren Rohrstück 112 ist ein Ringspalt 114 ausgebildet. Der Zwischenraum 108 ist mit dem Ringspalt 114 strömungsmäßig verbunden, sodass sich das Isoliervakuum bis in den Ringspalt 114 hinein erstreckt und für eine gute thermische Isolierung des inneren Rohrstückes 112 sorgt.

Auf das äußere Rohrstück 111 des Kupplungssteckers 101 ist eine elektrisch isolierende Hülse 116 aufgesteckt. Die Hülse 116 ist etwas länger als das äußere Rohrstück 111 und steht deshalb an dem distalen Ende 113 des Kupplungssteckers 101 über und bildet einen überstehenden Rand 117, der eine kreisringförmige Dichtung 118 haltert, die an dem distalen Ende 113 des Kupplungssteckers 101 anliegt. Die Dichtung 118 ist aus einem elektrisch isolierenden Material hergestellt, zum Beispiel aus Polytetrafluorethylen (PTFE) oder Torlon ^{®}. In dem ersten Anschlussflansch 109 ist eine Ringnut 120 eingestochen, in die eine Dichtung 121 eingesetzt ist. Die Dichtung 121 kann elektrisch leitend oder elektrisch nichtleitend ausgebildet sein.

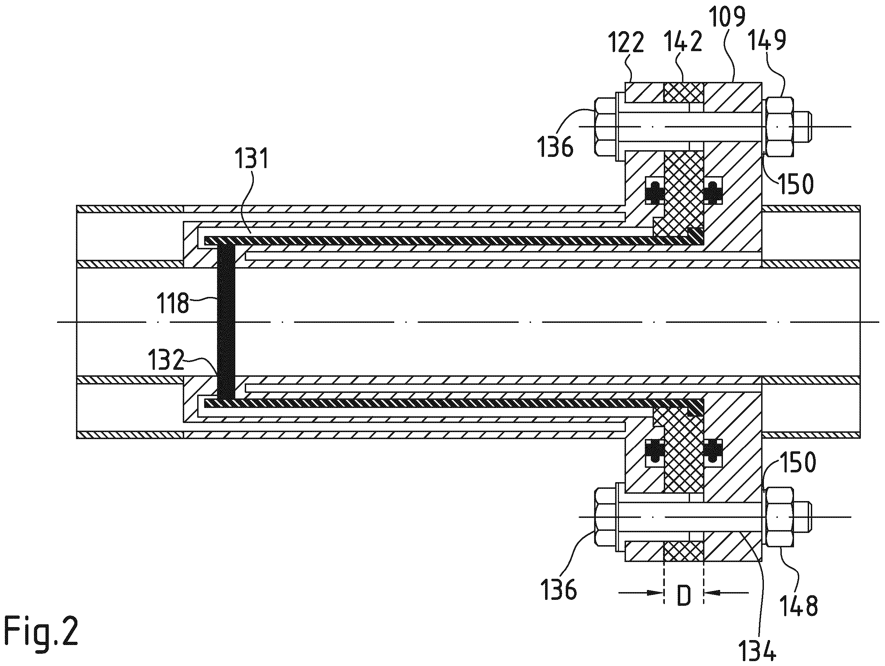

Die Kupplungsdose 102 weist einen zweiten Anschlussflansch 122, ein äußeres Rohrstück 123 und ein Inneres Rohrstück 124 auf. Die Rohrstücke 123,124 sind jeweils mit einem Ende an dem zweiten Anschlussflansch 122 angeschweißt, wobei zwischen den Rohrstücken 123,124 wiederum ein Ringspalt 126 ausgebildet ist. Die jeweils anderen Enden der Rohrstücke 123,124 sind mit der zweiten Kryoleitung 104 verbunden. Die zweite Kryoleitung weist ein Außenrohr 128 und ein Innenrohr 129 auf. Zwischen dem Außenrohr 128 und dem Innenrohr 129 ist ein Zwischenraum 130 gebildet, in dem ein Isoliervakuum herrscht, welches das Innenrohr 129 thermisch isoliert. Das Außenrohr 128 der zweiten Kryoleitung 104 ist mit dem äußeren Rohrstück 123 und das Innenrohr 129 mit dem inneren Rohrstück 124 der Kupplungsdose 102 verbunden, sodass der Zwischenraum 130 mit dem Ringspalt 126 strömungsmäßig in Verbindung steht und sich das Isoliervakuum bis in den Ringspalt 126 der Kupplungsdose 102 hinein erstreckt und für eine gute thermische Isolierung des inneren Rohrstückes 124 der Kupplungsdose 102 sorgt. Der Außendurchmesser der isolierenden Hülse 116 ist kleiner als der Innendurchmesser des inneren Rohrstücks der Kupplungsdose, sodass sich zwischen der Hülse 116 und dem inneren Rohrstück 124 ein Ringspalt 131 (Figur 2) bildet.

An dem Übergang zwischen der Kupplungsdose 102 und der zweiten Kryoleitung 104 ist ein ringförmiger Sitz 132 für die Dichtung 118 ausgebildet, die an dem Sitz 132 anliegt, wenn der Kupplungsstecker 101 vollständig in die Kupplungsdose 102 eingesteckt ist (Figur 2).

In radialer Richtung außen liegend weisen der erste und der zweite Anschlussflansch 109,122 Durchgangslöcher 133,134 für Befestigungsschrauben 136 auf. Die Durchgangslöcher 134 haben einen Durchmesser, der größer als der Durchmesser der Befestigungsschrauben 136 ist, um den Einbau von isolierenden Buchsen 137 zu ermöglichen, die im montierten Zustand mit einem Kragen 138 an dem zweiten Anschlussflansch 122 anliegen. In dem zweiten Anschlussflansch 122 ist eine Ringnut 139 eingestochen, in die eine Dichtung 141 eingesetzt ist. Die Dichtung 141 kann elektrisch leitend oder elektrisch nichtleitend ausgebildet sein.

Zwischen dem ersten und dem zweiten Anschlussflansch 109,122 ist eine Isolierscheibe 142 angeordnet, die eine zentrale Öffnung 143 aufweist, durch welche die isolierende Hülse 116 hindurchragt.

Die Isolierscheibe 142 weist auf der dem zweite Anschlussflansch 122 zugewandten Seite einen ringförmigen Vorsprung 144 auf, der genau in eine ringförmige Ausnehmung 145 in dem zweiten Anschlussflansch 122 passt und zur Zentrierung der Isolierscheibe 142 dient. Auf ihrer gegenüberliegenden Seite ist in der Isolierscheibe 142 eine ringförmige Ausnehmung 146 vorgesehen, die im zusammengebauten Zustand der Steckkupplung einen umlaufenden Kragen 147 der isolierenden Hülse 116 aufnimmt. Die ringförmigen Vorsprünge und Ausnehmungen sorgen für eine Zentrierung der einzelnen Bauteile zueinander. Die Isolierscheibe 142 weist darüber hinaus Durchgangslöcher 148 für die Befestigungsschrauben 136 auf, die an denselben Winkelpositionen angeordnet sind wie die Durchgangslöcher 133,134 in dem ersten bzw. zweiten Anschlussflansch 109,122, um die Montage der Befestigungsschrauben 136 zu ermöglichen, wenn die Isolierscheibe 142 und der erste bzw. zweite Anschlussflansch 109,122 in eine entsprechende Drehposition gedreht sind.

Figur 2 zeigt die Steckkupplung 100 aus Figur 1 in einem zusammengebauten Zustand. Die Befestigungsschrauben 136 sind mithilfe von Schraubenmuttern 149 und Unterlegscheiben 150 montiert und pressen den ersten und zweiten Anschlussflansch 109,122 von beiden Seiten her gegen die Isolierscheibe 142. Die Dicke D der Isolierscheibe 142 ist dabei so bemessen, dass das distale Ende 113 des Kupplungssteckers 101 die Dichtung 118 auf den Sitz 132 der Kupplungsdose 102 drückt. Die Dichtung 118 dichtet dabei den Übergang zwischen den Kupplungsstecker 101 und der Kupplungsdose 102 ab. Da sich die Dichtung 118 im Betrieb der Steckkupplung in Kontakt mit tiefkalten Medien befindet, ist eine 100-prozentige Dichtigkeit unter Umständen nicht gewährleistet. Falls tiefkaltes Medium an der Dichtung 118 vorbei in den Ringspalt 131 zwischen der isolierenden Hülse 116 und dem Innenrohr 124 der Kupplungsdose 102 eindringt und dort verdampft, dann verhindern die Dichtungen 121,141, die im warmen Bereich des ersten bzw. zweiten Anschlussflansches 109,122 angeordnet sind, dass verdampftes Medium aus der Steckkupplung in die Umgebung austritt. Bei entzündlichen Medien wie zum Beispiel flüssigem Erdgas oder flüssigem Wasserstoff ist das in höchstem Grade unerwünscht.

Wie aus Figur 2 ersichtlich ist existiert keine metallische Verbindung zwischen dem Kupplungsstecker 101 und der Kupplungsdose 102. Die elektrische isolierende Dichtung 118, die elektrische isolierende Hülse 116 sowie die Isolierscheibe 142 verhindern, dass sich Metallteile des Kupplungsstecker 101 und der Kupplungsdose 102 berühren. Das gilt selbst dann, wenn der Kupplungsstecker 101 schräg oder verkantet in die Kupplungsdose eingeführt wird. Die elektrische isolierende Hülse 116 verhindert, dass Metallteile des Kupplungssteckers 101 mit dem inneren Rohrstück 124 der Kupplungsdose 102 in Berührung kommen. Die Befestigungsschrauben 136 sind in den elektrisch isolierenden Hülsen 137 geführt und stellen ebenso keinen elektrischen Kontakt zwischen dem Kupplungsstecker 101 und der Kupplungsdose 102 her. Auf diese Weise wird eine galvanische Trennung zwischen den Kupplungsstecker 101 und der Kupplungsdose 102 erreicht.

Bei dem Zusammenbau der Steckkupplung wird zunächst der Kupplungsstecker in die Kupplungsdose eingesteckt. Dann wird die Isolierscheibe 142 verdreht bis die Durchgangslöcher 148 in der Isolierscheibe 142 mit den Durchgangslöchern 134 in dem zweiten Anschlussflansch 122 fluchten. Diese Drehposition der Isolierscheibe 142 wird mit einer oder mehreren teilweise eingesteckten Befestigungsschrauben 136 fixiert. Dann wird der Kupplungsstecker 101 verdreht bis die Befestigungsschrauben 136 auch durch die Durchgangslöcher 133 in dem ersten Anschlussflansch 109 durchsteckbar sind und mit den Schraubenmuttern 149 fixiert werden können.

Die Isolierscheibe 142 lässt sich relativ leicht drehen, die Steckkupplung 101 häufig jedoch nicht, weil die Steckkupplung mit der ersten Kryoleitung 103 fest verbunden ist. Daher wird ein weiteres Ausführungsbeispiel vorgeschlagen, bei dem die Steckkupplung 100 einfacher zu schließen ist.

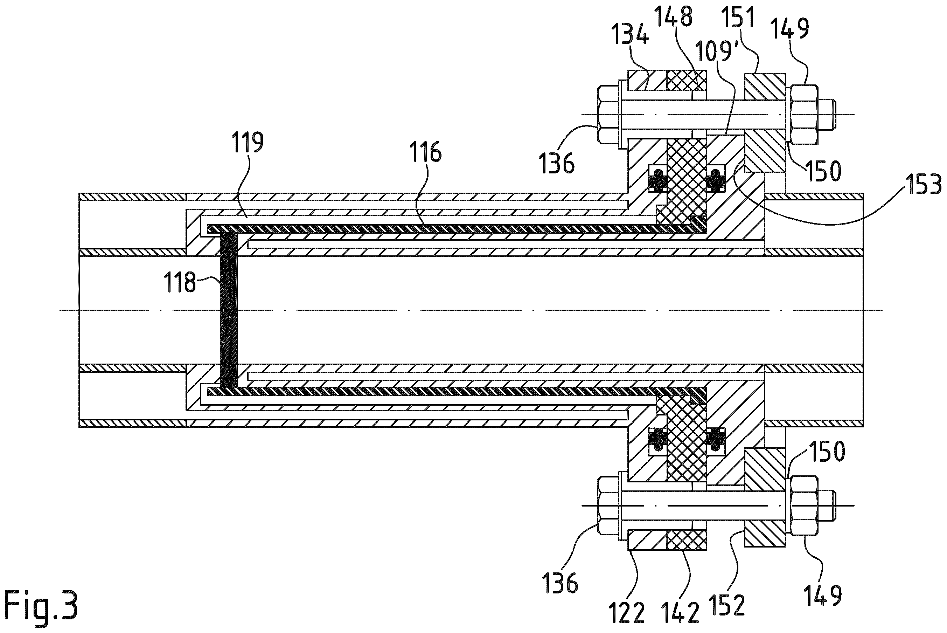

Figur 3 zeigt ein zweites Ausführungsbeispiel der erfindungsgemäßen Steckkupplung 100, die sich von der Steckverbindung gemäß Figur 2 vor allem dadurch unterscheidet, dass der erste Anschlussflansch 109' mit den Befestigungsschrauben nicht unmittelbar gegen die Isolierscheibe 142 bzw. den zweiten Befestigungsflansch 122 gedrückt wird, sondern die Spannkraft der Befestigungsschrauben 136 wird auf einen drehbaren Drehflansch 151 ausgeübt, der an dem ersten Anschlussflansch 109' anliegt und so die von den Befestigungsschrauben 136 ausgeübte Kraft auf den ersten Anschlussflansch 109' überträgt. Zu diesem Zweck ist der Außendurchmesser des Anschlussflansches 109' soweit reduziert, dass die Befestigungsschrauben 136 an einem Außenumfang des ersten Anschlussflansches 109' vorbeigehen. Der Drehflansch 151 ist als Kreisringscheibe ausgebildet, die Durchgangslöcher 152 für die Befestigungsschrauben 136 aufweist. Die Durchgangslöcher 152 sind konzentrisch zu den Durchgangslöchern 134 in dem zweiten Anschlussflansch 122 angeordnet. Der Drehflansch 151 ist in einem Sitz 153 auf dem erste Anschlussflansch 109' mit geringem Spiel aufgenommen, sodass der Drehflansch 151 auf dem ersten Anschlussflansch 109' einfach in eine Drehstellung zu drehen ist, in der die Durchgangslöcher 152 mit den Durchgangslöchern 134 in dem zweiten Anschlussflansch 122 fluchten, so dass die Befestigungsschrauben 136 montierbar sind. Bei diesem Ausführungsbeispiel ist es nicht erforderlich den Kupplungsstecker 101 nach dem Einstecken in die Kupplungsdose 102 zu verdrehen. Es genügt den Drehflansch 151 zu drehen, was für das Personal, dass die Steckkupplungsverbindung herstellt eine erhebliche Erleichterung ist.

Bei einer in den Figuren nicht dargestellten Abwandlung des zweiten Ausführungsbeispiels tauschen der erste und der zweite Anschlussflansch gewissermaßen in den Sinn ihre Rollen, dass ein Drehflansch auf dem zweiten Anschlussflansch aufliegt. Bei diesem abgewandelten zweiten Ausführungsbeispiel ist der Außendurchmesser des zweiten Anschlussflansches kleiner, sodass die Befestigungsschrauben 136 am Außenumfang des zweiten Anschlussflansches vorbeigehen. Auf diese Weise wird wieder erreicht, dass bei der Montage der Steckkupplung nur der leicht drehbare Drehflansch in eine Drehstellung gebracht werden muss, damit die Durchgangslöcher in dem Drehflansch mit den Durchgangslöchern in dem ersten Anschlussflansch fluchten und die Befestigungsschrauben montiert werden können. Bei dieser abgewandelten Ausführungsform sind die isolierenden Buchsen 137 in dem ersten Anschlussflansch 109 angeordnet.

In einer weiteren Abwandlung des ersten bzw. zweiten Ausführungsbeispiels sind die isolierende Hülse 116 und die Isolierscheibe 142 als einstückiges Einzelteil ausgebildet, wodurch die Anzahl der Einzelteile der Steckkupplung 100 reduziert wird. Das Einzelteil kann auch Vorteile bei der Montage der Steckkupplung haben.

**Bezugszeichenliste**

| | | | |
|---|---|---|---|
| 100 | Steckkupplung | 133 | Durchgangsloch |
| 101 | Kupplungsstecker | 134 | Durchgangsloch |
| 102 | Kupplungsdose | | |
| 103 | erste Kryoleitung | 136 | Befestigungsschraube |
| 104 | zweite Kryoleitung | 137 | Isolierende Buchsen |
| | | 138 | Kragen an der isolierenden Buchse |
| 106 | Außenrohr | 139 | Ringnut |
| 107 | Innenrohr | | |
| 108 | Zwischenraum | 141 | Dichtung |
| 109,109' | erste Anschlussflansch | 142 | Isolierscheibe |
| | | 143 | Zentrale Öffnung |
| 111 | Äußeres Rohrstück | 144 | Ringförmiger Vorsprung |
| 112 | Inneres Rohrstück | 145 | Ringförmige Ausnehmung |
| 113 | Distales Ende | 146 | Ringförmige Ausnehmung |
| 114 | Ringspalt | 147 | Umlaufender Kragen |
| | | 148 | Durchgangsloch |
| 116 | Isolierende Hülse | 149 | Schraubenmutter |
| 117 | Überstehender Rand | 150 | Unterlegscheibe |
| 118 | Dichtung | 151 | Drehflansch |
| | | 152 | Durchgangslöcher |
| 120 | Ringnut | 153 | Sitz |
| 121 | Dichtung | | |
| 122 | zweite Anschlussflansch | | |
| 123 | Äußeres Rohrstück | | |
| 124 | Inneres Rohrstück | | |
| 126 | Ringspalt | | |
| 128 | Außenrohr | | |
| 129 | Innenrohr | | |
| 131 | Zwischenraum | | |
| 132 | ringförmiger Sitz | | |

## Patentansprüche

1. Steckkupplung zum Verbinden einer ersten mit einer zweiten doppelwandigen vakuumisolierten Kryoleitung (103,104), wobei die Steckkupplung (100) einen Kupplungsstecker (101) und eine Kupplungsdose (102) umfasst,
- wobei der Kupplungsstecker (101) ein inneres und ein äußeres Rohrstück (111,112) sowie einen ersten Anschlussflansch (109,109') aufweist und mit der ersten Kryoleitung (103) verbindbar ist,
- wobei die Kupplungsdose (102) ein inneres und ein äußeres Rohrstück (123,124) sowie einen zweiten Anschlussflansch (122) aufweist und mit der zweiten Kryoleitung (104) verbindbar ist
- wobei an einem distalen Ende (113) des Kupplungssteckers (101) eine kreisringförmige Dichtung (118) angeordnet ist, so dass eine abgedichtete Verbindung zwischen der Kupplungsdose und dem Kupplungsstecker, wenn der Kupplungsstecker vollständig in die Kupplungsdose eingesteckt ist, entsteht,
**dadurch gekennzeichnet, dass**
die Dichtung (118) an dem distalen Ende (113) des Kupplungssteckers elektrisch isolierend ausgebildet ist,
dass eine isolierende Hülse (116) auf dem äußeren Rohrstück (111) des Kupplungssteckers (101) angeordnet ist und
dass eine Isolierscheibe (142) zwischen dem ersten und dem zweiten Anschlussflansch (109,109';122) liegt, wenn der Kupplungsstecker in die Kupplungsdose gesteckt ist.

2. Steckkupplung nach Anspruch 1, **dadurch gekennzeichnet, dass** in dem ersten und dem zweiten Anschlussflansch Durchgangslöcher (133,134) für Schrauben (136) zur Verbindung des ersten mit dem zweiten Anschlussflansch (109,109';122) vorgesehen sind und in den Durchgangslöchern (133,134) isolierende Buchsen eingesetzt sind, welche die Schrauben (133,134) gegenüber dem ersten und/oder zweiten Anschlussflansch (109,109'; 122) elektrisch isolieren.

3. Steckkupplung nach Anspruch 1 oder 2, **dadurch gekennzeichnet, dass** der Außendurchmesser des ersten Anschlussflansches (109,109') kleiner ist als der Außendurchmesser des zweiten Anschlussflansches (122), dass auf den ersten Anschlussflansch (109,109') ein drehbarer Drehflansch (151) mit Durchgangslöchern (152) für Schrauben (136) aufliegt, der in eine Drehstellung bringbar ist, in der die Durchgangslöcher (152) des Drehflansches (151) mit den Durchgangslöchern (134) in dem zweiten Anschlussflansch (122) fluchten.

4. Steckkupplung nach einem der vorstehenden Ansprüche, **dadurch gekennzeichnet, dass** eine Dichtung (121) zwischen der Isolierscheibe (142) und dem ersten Anschlussflansch (109,109') und/oder zwischen der Isolierscheibe (142) und dem zweiten Anschlussflansch (122) angeordnet ist.

5. Steckkupplung nach einem der vorstehenden Ansprüche, **dadurch gekennzeichnet, dass** die Isolierscheibe (142) und die isolierende Hülse (116) als einstückiges Einzelteil ausgebildet sind.

6. Verladeeinrichtung für kryogene Fluide mit einer Steckkupplung (100) nach einem der Ansprüche 1 bis 5.

## Claims

1. A plug-in coupling for connecting a first with a second double-walled, vacuum-insulated cryogenic line (103, 104), wherein the plug-in coupling (100) comprises a coupling plug (101) and a coupling socket (102),
- wherein the coupling plug (101) has an inner and an outer tubular piece (111, 112) and a first connecting flange (109, 109') and can be connected to the first cryogenic line (103),
- wherein the coupling socket (102) has an inner and an outer tubular piece (123, 124) and a second connecting flange (122) and can be connected to the second cryogenic line (104),
- wherein a circular ring seal (118) is arranged on a distal end (113) of the coupling plug (101), so that a sealed connection is created between the coupling socket and the coupling plug, when the coupling plug is completely inserted into the coupling socket,
**characterized in that**
the seal (118) is formed on the distal end (113) of the coupling plug so as to be electrically insulating,
that an insulating sleeve (116) is arranged on the outer tubular piece (111) of the coupling plug (101) and
that an insulating disk (142) lies between the first and the second connecting flange (109, 109'; 122), when the coupling plug is inserted into the coupling socket.

2. The plug-in coupling according to claim 1, **characterized in that** through holes (133, 134) are provided in the first and the second connecting flange for screws (136) to connect the first to the second connecting flange (109, 109'; 122) and insulating bushings are inserted into the through holes (133, 134), which electrically insulate the screws (133, 134) from the first and/or second connecting flange (109, 109'; 122).

3. The plug-in coupling according to claim 1 or 2, **characterized in that** the outer diameter of the first connecting flange (109, 109') is smaller than the outer diameter of the second connecting flange (122), that a rotatable rotary flange (151) with through holes (152) for screws (136) lie on the first connecting flange (109, 109'), which can be brought into a rotational position, in which the through holes (152) of the rotary flange (151) align with the through holes (134) in the second connecting flange (122).

4. The plug-in coupling according to any one of the preceding claims, **characterized in that** a seal (121) is arranged between the insulating disk (142) and the first connecting flange (109, 109') and/or between the insulating disk (142) and the second connecting flange (122).

5. The plug-in coupling according to any one of the preceding claims, **characterized in that** the insulating disk (142) and the insulating sleeve (116) are designed as a one-piece individual part.

6. A loading device for cryogenic fluids having a plug-in coupling (100) according to any one of claims 1 to 5.

## Revendications

1. Couplage enfichable pour le raccordement d'une première avec une deuxième conduite cryogénique isolée du vide à double paroi (103, 104), dans lequel le couplage enfichable (100) comprend un connecteur de couplage (101) et une prise de couplage (102),
- dans lequel le connecteur de couplage (101) comprend des éléments tubulaires interne et externe (111, 112) ainsi qu'une première bride de raccordement (109, 109') et peut être relié avec la première conduite cryogénique (103),
- dans lequel la prise de couplage (102) comprend des éléments tubulaires interne et externe (123, 124) ainsi qu'une deuxième bride de raccordement (122) et peut être relié avec la deuxième conduite cryogénique (104),
- dans lequel, à une extrémité distale (113) du connecteur de couplage (101), est disposé un joint d'étanchéité annulaire (118) de façon à ce qu'une liaison étanchéifiée soit obtenue entre la prise de couplage et le connecteur de couplage lorsque le connecteur de couplage est entièrement enfiché dans la prise de couplage,
**caractérisé en ce que**
le joint d'étanchéité (118) est réalisé de manière électriquement isolante à l'extrémité distale (113) du connecteur de couplage,
un manchon isolant (116) est disposé sur l'élément tubulaire externe (111) du connecteur de couplage (101) et
un disque isolant (142) se trouve entre la première et la deuxième bride de raccordement (109, 109' ; 122) lorsque le connecteur de couplage est enfiché dans la prise de couplage.

2. Couplage enfichable selon la revendication 1, **caractérisé en ce que**, dans les première et deuxième brides de raccordement, sont prévus des trous traversants (133, 134) pour des vis (136) afin de relier la première et la deuxième brides de raccordement (109, 109' ; 122) entre elles et, dans les trous traversants (133, 134), sont insérés des douilles isolantes qui isolent électriquement les vis (133, 134) par rapport à la première et/ou à la deuxième bride de raccordement (109, 109' ; 122).

3. Couplage enfichable selon la revendication 1 ou 2, **caractérisé en ce que** le diamètre extérieur de la première bride de raccordement (109, 109') est inférieur au diamètre extérieur de la deuxième bride de raccordement (122), **en ce que**, sur la première bride de raccordement (109, 109'), repose une bride rotative (151) avec des trous traversants (152) pour des vis (136), qui peut être amenée dans une position de rotation dans laquelle les trous traversants (152) de la bride rotative (151) sont alignés avec les trous traversants (134) de la deuxième bride de raccordement (122).

4. Couplage enfichable selon l'une des revendications précédentes, **caractérisé en ce qu'**un joint d'étanchéité (121) est disposé entre le disque isolant (142) et la première bride de raccordement (109, 109') et/ou entre le disque isolant (142) et la deuxième bride de raccordement (122).

5. Couplage enfichable selon l'une des revendications précédentes, **caractérisé en ce que** le disque isolant (142) et le manchon isolant (116) sont conçus d'une seule pièce.

6. Dispositif de rechargement pour des fluides cryogéniques avec un couplage enfichable (100) selon l'une des revendications 1 à 5.
